# EUROPÄISCHE PATENTSCHRIFT

(11) **EP 2 632 630 B1**
(45) Veröffentlichungstag und Bekanntmachung des Hinweises auf die Patenterteilung: **13.07.2016**
(21) Anmeldenummer: 11776754.1
(22) Anmeldetag: 26.10.2011
(51) Int. Cl.: B23Q 11/08

(54) **MODULARES FÜHRUNGSSYSTEM FÜR ABDECKUNGEN**
MODULAR GUIDING SYSTEM FOR COVERS
SYSTÈME DE GUIDAGE MODULAIRE POUR DES COUVERTURES

(30) Priorität: 07.12.2010 DE 102010061092; 26.10.2010 DE 102010060182
(43) Veröffentlichungstag der Anmeldung: 04.09.2013
(73) Patentinhaber: Eitec Führungsbahnschutz-Systeme GmbH, 85301 Schweitenkirchen (DE)
(72) Erfinder: KELBER, Tobias, 85376 Giggenhausen (DE); TRAUERNICHT, Gert, 42781 Haan (DE)
(74) Vertreter: Winter, Brandl, Fürniss, Hübner, Röss, Kaiser, Polte - Partnerschaft mbB
(86) Internationale Anmeldenummer: PCT/EP2011/068800
(87) Internationale Veröffentlichungsnummer: WO 2012/055935

(56) Entgegenhaltungen:
- DE-A1-102006 034 738
- DE-A1-102008 063 392
- DE-A1-102009 010 169
- DE-A1-102009 034 619

## Beschreibung

Die Erfindung betrifft ein modulares Führungssystem.

Modulare Führungssysteme werden beispielsweise bei Abdeckungen für Werkzeugmaschinen verwendet. Derartige Abdeckungen können über geeignete Antriebe oder durch die Bewegung einer Werkzeugspindel in X-, Y- und/oder Z-Richtung bewegt werden. Da bei modernen Werkzeugmaschinen die Spindeln mit hohen Beschleunigungen verstellt werden, sind die Anforderungen an die Festigkeit der Abdeckungen, insbesondere an die seitliche Führung dieser Abdeckungen erheblich. In vielen Fällen sind diese Abdeckungen als Gliederschürzen ausgeführt, wie sie beispielsweise von der Anmelderin unter der Bezeichnung "Alutec" angeboten werden. Gliederschürzen werden bei Verfahrgeschwindigkeiten bis zu 150m/min eingesetzt, wobei die Beschleunigungen im Bereich von 2g liegen können.

Die Führung bekannter Gliederschürzen erfolgt gemäß der DE 297 241 58 U1 entlang komplexer Rahmenstrukturen, die als Schraub- oder Schweißkonstruktion ausgeführt ist, wobei jeweils Sonderanfertigungen erforderlich sind, die an die jeweilige Werkzeugmaschine und den verbleibenden Bauraum angepasst sein muss.

Die Herstellung dieser Rahmenstrukturen ist sehr aufwändig und bestimmt somit erheblich den Preis der Abdeckung. DE-102009010169 offenbart ein Führungssystem nach dem Oberbegriff des Anspruchs 1.

Eine weitere Ausführungsform eines Führungssystems mit Stützrahmen ist der DE 10 2006 034 738 A1 entnehmbar.

Dem gegenüber liegt der Erfindung die Aufgabe zugrunde ein modulares Führungssystem zu schaffen, das eine einfache Anpassung an unterschiedliche Einsatzbereiche ermöglicht.

Diese Aufgabe wird durch ein modulares Führungssystem mit den Merkmalen des Patentanspruchs 1 gelöst.

Je nach Relativpositionierung der Profilstücke können unterschiedliche Führungsaufgaben gelöst werden, wobei die Rahmenteile im Unterschied zu den eingangs genannten Lösungen eine Doppelfunktion erfüllen, da sie zum Einen die statische Abstützung der Rahmenstruktur und zum Anderen auch die Führung der Abdeckung, beispielsweise der Gliederschürze übernehmen. Bei den herkömmlichen Lösungen sind die Führungen an eine Stützkonstruktion angesetzt.

Durch diesen modularen Aufbau mit zwei Sätzen von Profilstücken und sonstigen, für die Rahmenkonstruktion erforderlichen Rahmenteilen, beispielsweise Verbindungselemente, Eckprofile, Schneckenplatten etc. kann eine sehr einfache, kostengünstige Anpassung an unterschiedliche Aufgabenstellungen erfolgen.

Bei einem Ausführungsbeispiel der Erfindung sind die Profilstücke mit zueinander kompatiblen Ausnehmungen zur Aufnahme eines Verbindungsmittels ausgeführt. Dieses Verbindungsmittel kann beispielsweise durch einen Nutenstein ausgeführt sein, der in ein entsprechendes Nutprofil eingesetzt ist. Natürlich können auch andere Verbindungsmittel, wie beispielsweise in die Nutprofile eingesetzten Schrauben verwendet werden.

Eines der Profilstücke kann vorzugsweise arbeitsraumseitig angesetzt werden, wobei es dann zur Ableitung von Spänen mit einer Schräge ausgeführt werden kann.

Die Profilstücke sind bei einem Ausführungsbeispiel so ausgelegt, dass sie sowohl eine Trag- als auch eine Führungsfunktion übernehmen können.

Die Profilstücke und die sonstigen Rahmenteile sind mit einer kompatiblen Profilierung ausgeführt, so dass die Montage vereinfacht ist. Dabei bietet es sich an, ein handelsübliches Profil zu verwenden, so dass diese Rahmenteile zugekauft werden und die Führungsbereiche durch die erfindungsgemäßen Profilstücke ausgebildet werden, die mit einer kompatiblen Profilierung ausgeführt sind.

In dem Fall, in dem der durch die Aufnahme gebildete Bauraum nicht ausreicht, um ein Führungselement aufzunehmen, können zwischen die beiden Profilstücke Distanzelemente eingesetzt werden.

Der Aufnahmeraum ist vorzugsweise so ausgelegt, dass beim Zusammenfügen der Profilstücke das jeweilige Führungselement geklemmt oder formschlüssig lagefixiert ist.

Dieses Führungselement kann beispielsweise ein Führungssteg sein, der zwischen zwei Profilstücke eingeklemmt ist, wobei diese Profilstücke eine identische oder unterschiedliche Profilierung aufweisen können.

Alternativ kann die Aufnahme auch zur Aufnahme der Führungselemente einer hängend gelagerten Schürze, beispielsweise einer Wälzlagerung oder Gleitlagerung dienen.

Die Profilstücke können zur besseren Anbindung von weiteren Bauelementen, wie beispielsweise von Schneckenplatten, mit Durchbrüchen zur Aufnahme von Spannstiften versehen sein.

Bei einem Ausführungsbeispiel der Erfindung ist es vorgesehen, zumindest eines der Profilstücke mit einer Ausnehmung zum Ansetzen eines Abstreifers auszuführen.

Zur Gewichtsminimierung können die Profilstücke mit Hohlräumen ausgeführt sein.

Die Herstellung erfolgt vorzugsweise aus Aluminium durch Extrudieren.

Bevorzugte Ausführungsbeispiele der Erfindung werden im Folgenden anhand schematischer Zeichnungen erläutert.
Figur 1 zeigt eine bevorzugte Anwendungsmöglichkeit des modularen Führungssystems zur verfahrbaren Abstützung einer Gliederschürzenanordnung in X- und Y-Richtung,
Figur 2 zeigt ein erstes Querschnittsprofil für eine Führungsschiene des erfindungsgemäßen Führungssystems,
Figur 3 zeigt ein zweites Querschnittsprofil für eine Führungsschiene des erfindungsgemäßen Führungssystems,
Figur 4 zeigt ein erstes Ausführungsbeispiel einer Führungsschiene bestehend aus zwei Querschnittsprofilen gemäß der Figur 2 und Figur 3,
Figur 5 zeigt ein zweites Ausführungsbeispiel einer Führungsschiene bestehend aus zwei Querschnittsprofilen gemäß der Figur 3 mit eingeschraubten Auflagerflächen,
Figur 6 zeigt eine zum zweiten Ausführungsbeispiel alternative Ausgestaltung einer Führungsschiene bestehend aus zwei Querschnittsprofilen gemäß der Figur 3 mit eingesetzter Auflagerschiene,
Figur 7 zeigt eine Montagevariante einer Führungsschiene bestehend aus zwei Querschnittsprofilen gemäß der Figur 2 und Figur 3,
Figur 8 zeigt ein drittes Ausführungsbeispiel einer Führungsschiene bestehend aus zwei Querschnittsprofilen gemäß der Figur 3 und einer Abwandlung des Querschnittsprofils gemäß der Figur 3,
Figur 9 zeigt die Verknüpfungsmöglichkeit eines der aus den erfindungsgemäßen Querschnittsprofilen möglichen Führungsschienen (vorliegend gemäß der Figur 8) mit einer Schiene mit Standardprofil;
Figur 10 zeigt eine weitere Einsatzmöglichkeit eines der aus den erfindungsgemäßen Querschnittsprofilen möglichen Führungsschienen (vorliegend gemäß der Figur 8) und
Figur 11 zeigt ein weiteres Ausführungsbeispiel eines Abdecksystems, das mit dem modularen Führungssystem ausgeführt ist.

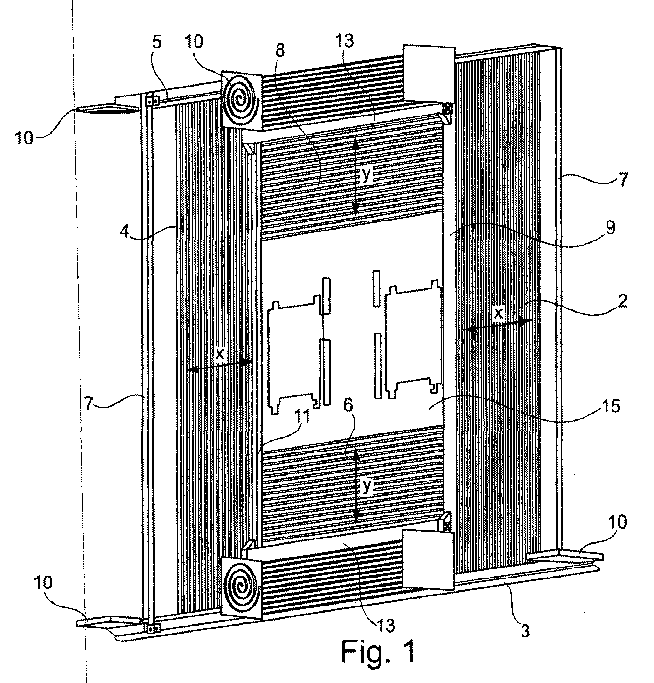

Figur 1 zeigt eine Prinzipdarstellung eines Abdecksystems für eine Werkzeugmaschine mit in X-Richtung verfahrbaren Gliederschürzen 2, 4 und in Y-Richtung verfahrbaren Gliederschürzen 6, 8, die entlang entsprechender X-/Y-Führungen verschiebbar geführt sind. Diese Gliederschürzen 6, 8 sind beispielsweise an eine zentrale Spindel (nicht weiter im Detail dargestellt) angekoppelt, sodass die Spindelbewegung auf die Gliederschürzen 6, 8 übertragen wird und diese somit in X- und Y-Richtung folgen. Das Abdecksystem ist mit dem erfindungsgemäßen Führungssystem ausgeführt.

Die aus der linearen Führung ausgeschobenen Endabschnitte der Gliederschürzen 2, 4, 6, 8 werden dabei in schematisch dargestellte, sich in Verlängerung der jeweiligen Führung erstreckenden Spiral oder Sehneckenplatten 10 spiralförmig eingeführt, sodass die ausgeschobenen Endabschnitte mit minimalem Bauraum in den Schneckenplatten 10 aufgenommen werden.

Erfindungsgemäß ist das gesamte dargestellte Führungssystem modular aufgebaut, wobei die Trag- und Führungsbereiche im Wesentlichen aus stangen- oder stabförmigen Profilelementen 3, 5, 7, 9, 11 zusammengesetzt sind, die anhand der folgenden Figuren erläutert werden. Das modulare Führungssystem basiert im Prinzip auf Profilen bzw. Profilelementen 3, 5, 7, 9, 11, die jeweils durch zwei unterschiedliche stabförmige Profilstücke 12, 14 gebildet werden, von denen jeweils eine Vielzahl in unterschiedlichen Längenabmessungen vorhanden sind, die dann mit den sonstigen Bauelementen zur Trag- und Führungsstruktur zusammengesetzt werden.

Konkret besteht ein Führungssystem, wie es beispielhaft in der Figur 1 dargestellt ist, aus einem Profilelement-Rahmen, wobei die einzelnen Profilelemente 3, 5, 7, 9, 11 und deren jeweilige stabförmige Profilstücke 12, 14 (welche zur Ausbildung eines Profil-elements 3, 5, 7, 9, 11 zusammengesetzt werden) unter Einhaltung räumlicher Abmessungen sowie nach Maßgabe der zu erfüllenden Stütz-, Aufnahme- und Führungsfunktionen zu dem Profilelement-Rahmen individuell zusammenfügbar sind. Vorliegend hat der nur beispielhaft dargestellte Rahmen zumindest ein unteres, in X-Richtung gemäß der Figur 1 sich erstreckendes Profilelement 3, an dessen beiden Enden jeweils eine Schneckenplatte 10 so montiert ist, dass eine im/am unteren Profilelement 3 ausgebildete Horizontal-Führung für zwei sich vertikal erstreckende, in X-Richtung beabstandete Gleitschürzen 2, 4 in eine schneckenförmige Schürzenführung der Schneckenplatte 10 einmündet. Vertikal gegenüber dem unteren Profilelement 3 befindet sich zumindest ein oberes, ebenfalls in X-Richtung sich erstreckendes Profilelement 5, an dessen beiden Enden weitere Schneckenplatten 10 in Übereinstimmung zum unteren Profilelement 3 montiert sind. Das obere Profilelement 5 dient vorliegend zur hängenden Aufnahme der beiden Vertikalschürzen 2, 4, wohingegen das untere Profilelement 3 zur abstützenden Aufnahme der Vertikalschürzen 2, 4 dient. Demzufolge sind beide horizontalen Profilelemente 3, 5 jeweils aus unterschiedlichen stabförmigen Profilstücken 12, 14 aus einem modularen Baukasten gemäß der Erfindung zusammengesetzt, wie er nachfolgend noch im Einzelnen beschrieben wird.

Die oberen und unteren horizontalen Profilelemente 3, 5 sind durch zwei vertikale Profilelemente 7 fest miteinander verbunden, die unter Ausbildung eines im Wesentlichen starren Rechteckrahmens an die Endabschnitte der horizontalen Profilelemente 3, 5 angeschraubt sind. Ferner sind zwei weitere vertikale Profilelemente 9, 11 am oberen und unteren Profilelement 3, 5 horizontal verschiebbar gelagert, die wiederum durch zwei horizontal sich erstreckende Leistenprofile 13 in einem vorbestimmten Horizontalabstand zueinander gehalten sind. Die beiden horizontal verfahrbaren Profilelemente 9, 11 sind vorliegend vorzugsweise aus den selben stabförmigen Profilstücken zusammengesetzt, sodass die beiden Profilelemente 9, 11 jeweils auf einer einander zuweisenden Längsseite eine Gleit- oder Abwälzaufnahme für dazwischen angeordnete, horizontal sich erstreckende Gliederschürzen 6, 8 ausbilden und an voneinander abweisenden Seiten mit den beiden vertikalen Gliederschürzen 2, 4 verbunden sind und somit mit diesen mitlaufen. Auch die vertikalen, (horizontal) verfahrbaren Profilelemente 9, 11 sind endseitig mit Schneckenplatten 10 bestückt. Die beiden in y-Richtung verfahrbaren Gliederschürzen 6, 8 sind entlang des durch die Profilelemente 9, 11 und 13 definierten Rahmen geführt, der wiederum in x-Richtung mit den beiden in Horizontalrichtung verfahrbaren Gliederschürzen 2, 4 verbunden ist. Die in Figur 1 dargestellten Öffnungen einer Adapterplatte 15 werden beispielsweise jeweils von einer Pinole einer Spindel durchsetzt, wobei in diesem Fall zwei Spindeln in Parallelrichtung nebeneinander angeordnet und gemeinsam verfahrbar sind, wobei der Arbeitsraum zum Spindelantrieb hin durch die in x- und y-Richtung verfahrbaren Gliederschürzen 2, 4, 6, 8 abgedeckt sind. Selbstverständlich kann anstelle einer derartigen Gliederschürze, beispielsweise aus Aluminiumprofilen auch eine andere geeignete Abdeckung, beispielsweise eine Faltenbalgabdeckung, eine Stahllamellenabdeckung oder dergleichen verwendet werden. Derartige Abdeckungen sind im Stand der Technik bekannt, so dass keine weiteren Erläuterungen erforderlich sind.

Wie erwähnt, laufen die in Figur 1 dargestellten Ausführungsbeispiel verwendeten Glieder der Gliederschürzen 2, 4, 6, 8 bei ihrer Bewegung in y-Richtung bzw. x-Richtung in die an den jeweiligen Endabschnitten der Führungsbahn angeordneten Schneckenplatten 10 ein, so dass die Tiefe des Abdecksystems gering ist, da keine eigene lineare Führung nach hinten (aus der Zeichenebene heraus) vorgesehen sein muss.

In der Darstellung gemäß Figur 1 sind die zur Aufnahme der ausgeschobenen Endabschnitte der Gliederschürzen 2, 4, 6, 8 vorgesehenen Schneckenplatten 10 nur schematisch, nicht in der geometrisch korrekten Orientierung eingezeichnet.

Im Mittenbereich des Rahmens ist die Montage- oder Adapterplatte 15 angeordnet, die an ihren beiden Vertikalkanten mit den vertikalen, verfahrbaren Profilelementen 9, 11 verschraubt ist und die an ihren beiden Horizontalkanten mit den Horizontalschürzen 6, 8 fest verbunden ist. Die Adapterplatte 15 dient hierbei zur Anbringung der Anordnung an ein in X- und Y-Richtung bewegbares Maschinenbauteil wie der vorstehend genannten Spindel. D.h. wird die Adapterplatte 15 beispielsweise nach oben bewegt, spult sich die obere Horizontalschürze 8 in den Schneckenplatten 10 auf, wohingegen die untere Horizontalschürze 6 aus den Schneckenplatten 10 abgespult wird. Fährt die Adapterplatte 15 z.B. gemäß der Figur 1 nach rechts, spult sich die rechte Vertikalschürze 2 in den Schneckenplatten 10 auf, wohingegen die linke Vertikalschürze 4 aus den Schneckenplatten 10 abgespult wird.

In den nachfolgend beschriebenen Figuren sind unterschiedliche stabförmige Profilstücke 12, 14 dargestellt, die beliebig miteinander unter Ausbildung eines im Wesentlichen individuellen Profilelements mit bestimmten Führungs-, Aufnahme- und Verschraubungseigenschaften und Möglichkeiten kombinierbar sind.

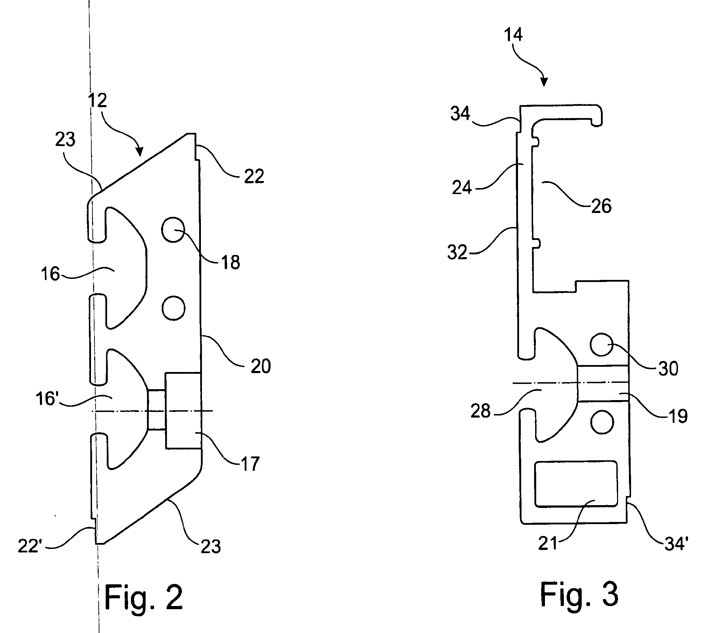

Figur 2 zeigt ein Profilstück 12 mit einem länglichen rechteckartigen Profil, dessen Schmalflächen (Ober- und Unterseite gemäß Figur 2) angeschrägt sind. In anderen Worten ausgedrückt, hat die Querschnittsform des Profilstücks 12 gemäß der Figur 2 im Wesentlichen eine Parallelogramm-Form, wobei die Kanten bis auf eine, gemäß der Figur 2 oberste rechte Kante abgerundet sind. Dieses Profilstück 12 ist mit zwei übereinanderliegenden, Im Querschnitt pilz- oder schwalbenschwanzartigen Profilnuten 16, 16' ausgeführt, wobei in einem an die in Figur 2 obere Profilnut 16 angrenzenden Bereich (d.h. gemäß Figur 2 rechts des Pilzkopfs) zwei Durchbrüche 18 oder Bohrungen in Längsrichtung des Profilstücks 12 zur Aufnahme von nicht weiter dargestellten Spannstiften ausgeführt sind. Die untere Profilnut 16' durchsetzt das Profilstück 12 in Querrichtung D.h. in Verlängerung zur unteren Profilnut 16' (gemäß Figur 2 rechts des Pilzkopfs) sind in Querrichtung des Profilstücks 12 Durchgangskanäle/-bohrungen 17 ausgeformt, die in einem vorbestimmten Parallelabstand zueinander längs des Profilstücks 12 ausgebildet sind und die beispielsweise zur Montage an anderen Profilstücken oder -elementen verwendet werden.

Das parallelogrammförmige Profilstück 12 gemäß Figur 2 hat folglich zwei lange und zwei kurze Seiten (-flächen), wobei sich die pilzförmigen Profilnuten 16, 16' an ihren jeweiligen Hälsen in Richtung zur einen langen Seite hin unter Ausbildung von inneren Hinterschneidungen schlitzförmig öffnen. Auf der hierzu gegenüberliegenden langen Seite des parallelogrammförmigen Querschnittsprofils, d.h. an der in Figur 2 rechten Seitenfläche 20 ist eine in Figur 2 angedeutete (flache) Abstufung 22 im Bereich der vorstehend genannten, nicht abgerundeten Kante ausgebildet. Vorzugsweise ist auch an einer diametral gegenüberliegenden Kante des Profilsstücks 12 eine weitere Abstufung 22'ausgebildet. Wie nachfolgend noch detaillierter beschrieben wird, bilden diese zusammen (in Kooperation) mit einem weiteren Profilstück, das in Anlage mit dem Profilstück 12 gemäß Figur 2 verschraubt wird und an gegenüberliegender Stelle ebenfalls solche Abstufungen hat, eine Aufnahme- oder Klemmnut für eine externe, leistenartige Führungs- bzw. Gleitschiene.

In der Figur 3 ist ein anderes Profilstück 14 mit zur Figur 2 unterschiedlicher Querschnittsform dargestellt.

Dieses andere Profilstück 14 hat eine etwas andere Profilierung, mit einer in etwa rechteckförmigen (nicht parallelogrammartigen) Grundstruktur, aus der sich gemäß Figur 3 nach oben hin (in Richtung hin zu der einen Schmalseite) ein L-Profil 24 erstreckt, das zusammen mit dem übrigen Profilbereich einen Raum 26 abschnittsweise (U-förmig) umgreift, wobei die Öffnung des Raums 26 (der U-Form) zur einen Langseite des Profils hinweist. In dem gemäß Figur 3 darunterliegenden (zum U-Raum unmittelbar benachbarten) etwa rechteckförmig ausgebildeten (Voll-) Profilbereich ist ein pilz- oder schwalbenschwanzartiges Nutprofil 28 ausgebildet, dessen Grundstruktur derjenigen der Nutprofile 16, 16' des vorstehend beschriebenen Profilstücks 12 entspricht. Auch das Nutprofil 28 öffnet sich schlitzförmig und längsdurchgehend zu der anderen Langseite 32 des Reehteckprofils und wird von in Längsrichtung beabstandeten Querbohrungen 19 mit der gegenüberliegenden einen Langseite (rechts in Figur 2) verbunden, zu der hin sich auch der Raum 26 öffnet. Im Bereich des Nutprofils 28 (oberhalb des Pilzkopfs, entsprechend der rechten Seite gemäß der Figur 3) sind wiederum zwei Durchbrüche bzw. Längsbohrungen 30 ausgebildet, deren Geometrie und Abstand den Durchbrüchen bzw. Längsbohrungen 18 gemäß Figur 2 entspricht.

Die bisher genannten und beschriebenen Profilstücke 12, 14 sind vorzugsweise aus Aluminium und weiter vorzugsweise im Extrusionsverfahren hergestellt.

An der in Figur 3 linken langen Seitenfläche 32 des Profilstücks 14 (jene Langseite, in der sich die Profilnut 28 öffnet) und/oder an der gemäß Figur 3 rechten (gegenüberliegenden) langen Seitenfläche ist im Bereich einer gemäß Figur 3 oberen (links) und/oder unteren (rechts), vorzugsweise nicht abgerundeten Kante jeweils eine zur Abstufung 22 kompatible Abstufung 34, 34' ausgebildet, die sich mit der Abstufung 22 des Profils 12 gemäß Figur 2 zu der bereits erwähnten Aufnahme ergänzt. Schließlich sei noch darauf hingewiesen, dass das Profilstück 14 gemäß Figur 3 in seinem (Voll-) Materialbereich neben der Profilnut 28 eine im wesentlichen rechteckige, in Längsrichtung durchgehende Aushöhlung 21 hat, um zum Einen Gewicht und zum Anderen Materialkosten einzusparen und den Extrusionsvorgang zu vereinfachen.

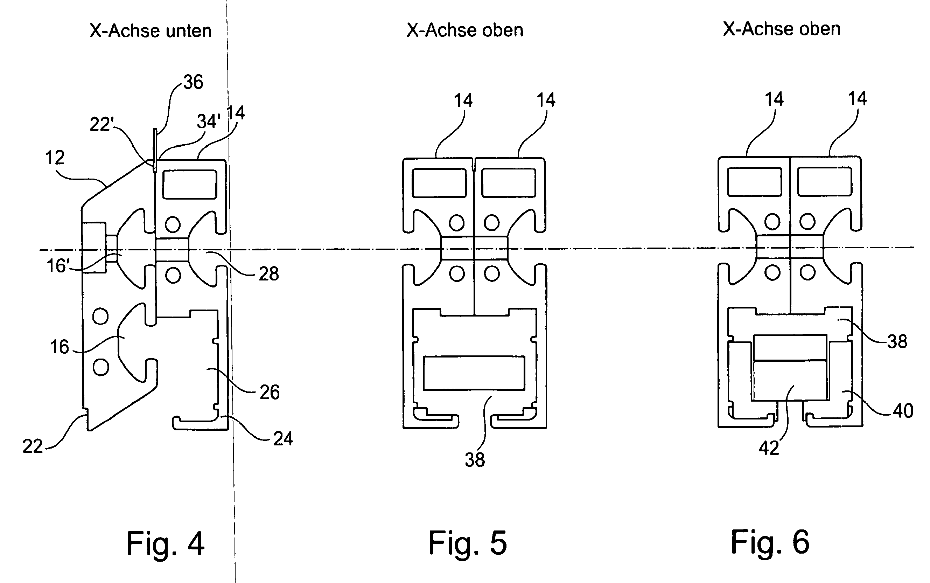

Figur 4 zeigt eine erste Möglichkeit, derartige Profilstücke 12, 14 miteinander zu verbinden, wie sie vorstehend beschrieben wurden, um jeweils unterschiedlich gestaltete Profilelemente auszubilden. Dabei sind die beiden Profilnuten 16', 28 der Profilstücke 12, 14 zueinander (axial) ausgerichtet, sodass das L-Profil 24 des Profilstücks 14 gemäß Figur 3 in der Darstellung gemäß Figur 4 nach unten zeigt und sich zur Profilnut 16 des Profils 12 gemäß Figur 2 hin öffnet. D.h. beide stabförmigen Profile 12, 14 liegen an deren jeweils einen Langseite flächig aneinander, wobei die Anlage-Langseite des Profils 12 gemäß Figur 2 jene Seite ist, auf der sich die Abstufungen 22', 34' befinden und die Langseite des Profils 14 gemäß Figur 3 jene Seite ist, auf welcher sich der U-Raum 26 öffnet.

Wie bereits oben erwähnt, ergänzen sich die beiden Abstufungen 22', 34' der beiden Profilstücke 12, 14 zu einer Aufnahme, in die ein Führungssteg 36 eingeklemmt wird/ist, auf den beispielsweise eine in X-Richtung verfahrbare Gliederschürze abgestützt ist, wobei diese beispielsweise stirnseitig mit einem Schlitz ausgeführt ist, in den der Führungssteg 36 gleitend eintaucht. Dieser Steg 36 kann beispielsweise als Stahlband ausgeführt sein. Das durch die beiden Profilstücke 12, 14 ausgebildete Profilelement gemäß Figur 4 könnte beispielsweise beim Profilrahmen gemäß der Figur 1 das untere, sich in X-Richtung erstreckende Profilelement 3 repräsentieren.

Figur 5 zeigt einen Anwendungsfall, bei dem zwei (gleiche) Profilstücke 14 vorliegend gemäß der Figur 3 unter Ausbildung eines Profilelements derart zusammengesetzt sind, dass die beiden L-Schenkel 24 gemeinsam einen Aufnahmeraum 38 für Wälzlager bilden (bestehend aus den beiden Aufnahmeräumen 26 der einzelnen Profilstücke 14), der sich zu der gemäß Figur 5 unteren Schmalseite schlitzartig (unter Ausbildung einer inneren Hinterschneidung) öffnet. An den Innenseiten der Hinterschneidungen sind beidseitig der schlitzförmigen Öffnung Auflagerleisten oder Bänder (ggf. durch Schrauben oder Kleben) fixiert, die jeweils eine Abwälzfläche für Wälzkörper (Kugeln, Walzen) ausbilden. Die nur andeutungsweise dargestellten Wälzlager sind beispielsweise an einer hängend daran gelagerten, in X-Richtung verstellbaren Gliederschürze angeordnet, wie sie in etwa in Figur 1 dargestellt ist. Demzufolge könnte dieses Profilelement gemäß Figur 5 das gemäß Figur 1 obere, in X-Richtung verlaufende Profil 5 darstellen.

Figur 6 zeigt eine zu Figur 5 ähnliche Variante, bei der im Aufnahmeraum 38 (ausgebildet durch zwei gleiche Profilstücke 14 gemäß Figur 3 bzw. deren jeweilige Aufnahmeräume 26) eine Gleitschiene 40 aufgenommen bzw. eingesetzt ist, entlang der Gleitkörper wie beispielsweise in Figur 6 angedeutete Führungs-(gleit-)bolzen 42 einer Gliederschürze abgleiten. Der übrige Aufbau entspricht dem des Profilelements gemäß Figur 5. Auch in diesem Fall wäre das Profilelement gemäß Figur 6 als oberes horizontales Profil 5 im Profilrahmen gemäß Figur 1 geeignet.

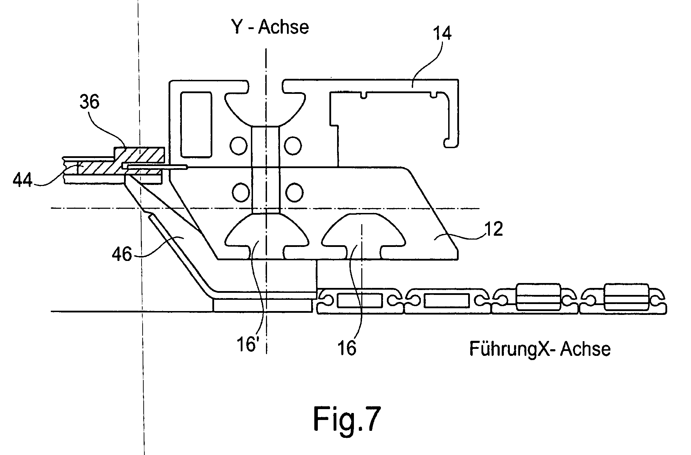

Figur 7 zeigt ein Ausführungsbeispiel, bei dem zwei Profilstücke 12, 14 gemäß der Figur 2 und 3 miteinander verbunden sind.

Bei dieser Variante kommt das Profilstück 12 gemäß Figur 2 mit seiner von den Profilnuten 16, 16'abgewandten Langseite mit dem Profil 14 gemäß Figur 3 in Anlage, dessen Anlageseite der des Beispiels gemäß der Figur 4 entspricht. Hierbei wird durch die beiden Abstufungen 22, 34' in den beiden unterschiedlichen Profilen 12, 14 wiederum eine spaltförmige Aufnahme für einen Führungssteg 36 ausgebildet, der in ein geschlitztes Führungsstück 44 einer Gliederschürze eintaucht. In der Darstellung gemäß Figur 7 ist zusätzlich noch ein Abstreifer 46 dargestellt, der an dem Profilstück 12 gemäß der Figur 2 auf der Langseite mit den zwei Führungsschlitzen 16, 16'montiert ist, und der an der am Steg 36 geführten Gliederschürze arbeitsraumseitig anliegt. Dieses Profilelement eignet sich demnach für ein Abdecksystem gemäß Figur 1, wobei die in x-Richtung geführten Gliederschürzen 2, 4 in der Darstellung gemäß Figur 7 in der Draufsicht dargestellt sind, und über das Profilelement, das durch die Profilstücke 12, 14 (Figur 7) gebildet ist mit den innen liegenden, in y-Richtung verfahrbaren Gliederschürzen 6, 8 verbunden ist. Der erwähnte Abstreifer 46 ist dabei in dem Bereich zwischen der Befestigung an der Gliederschürze 2, 4 und dem Profilelement (Profilstücke 12, 14) eingeklemmt. Die y-Führung der mit der Adapterplatte 15 verbundenen Gliederschürzen 8, 6 erfolgt dann entlang des Führungsstegs 36. In der zeichnerischen Darstellung gemäß Figur 7 verläuft die Y-Achse somit senkrecht zur Zeichenebene während die X-Achse parallel zur Zeichenebene liegt.

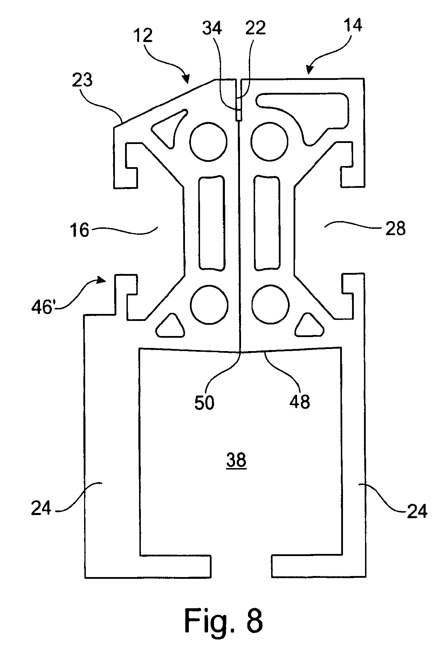

Figur 8 zeigt eine Variante eines Profilelements mit zwei unterschiedlichen Profilstücken 12, 14, wobei das eine (rechte) Profilstück 14 weitgehend dem Profil gemäß der Figur 3 entspricht und dessen Anlageseite jene Langseite ist, zu welcher sich der Aufnahmeraum 26 öffnet. Das andere (linke) Profilstück 12 ist formentechnisch eine Kombination aus den Profilen 12, 14 gemäß Figur 2 und 3. Es besteht aus einer schrägen Schmalseite 23 (wie bei einem Parallelogramm gemäß Figur 2) zur Ableitung von Spänen in dem gemäß Figur 8 oberen Bereich des Profils 12. In diesem Bereich ist auf der einen Langseite auch eine Ausnehmung oder Aussparung 46' zum Ein-/Ansetzen eines Abstreifers 46 ausgebildet, wohingegen auf der gegenüberliegenden Langseite eine Abstufung 22 zur späteren Ausbildung eines Aufnahme-/Klemmschlitzes für den Führungssteg 36 ausgenommen ist.

Bei dieser Variante ist das gemäß Figur 8 linke Profilstück 12 in seinem unteren Bereich mit einem L-Schenkel 24 in Anlehnung an das Profil 14 gemäß Figur 3 ausgeführt, sodass sich beide Profile 12, 14 bei in Anlage kommen gemeinsam zu dem zur unteren Schmalseite hin öffnenden Aufnahmeraum 38 (mit Hinterschneidung) ergänzen und somit eine Gliederschürze hängend darin gelagert werden kann. Die in der Figur 8 obere (innere) Wandung 48 des Aufnahmeraums 38 ist etwas schräg (sowie dachförmig) nach innen hin vorspringend angestellt, sodass eine darin eingesetzte (nicht weiter dargestellte) Führungsschiene oder dergleichen durch den vorspringenden Scheitel 50 geklemmt wird.

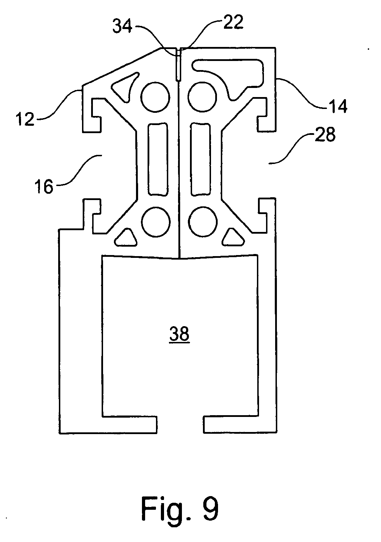

Figur 9 zeigt ein weiteres Strukturelement des modularen Führungssystems im Schnitt, wobei zwei Profilstücke 12, 14 mit einem Grundaufbau, der demjenigen der vorbeschriebenen Ausführungsbeispiele entspricht, abschnittsweise ein handelsübliches Standardprofil bilden. Dessen Nutprofilierung ist mit den Profilnuten 16, 28 aller erfindungsgemäßen Profilstücke kompatibel ausgeführt, sodass diese mittels den bekannten Standardprofilelementen fest verschraubt werden können. Die (baukastenartige) Verbindung der vorstehend beschriebenen Profilstücke 12, 14 mit dem handelsüblichen Standardprofil kann beispielsweise durch Nutsteine oder dergleichen (nicht dargestellt) erfolgen, die in eine der Nutprofile 16, 28 eines der Profilstücke eingesetzt werden und mit ihren Gewindeabschnitten beide Profilstücke an den jeweiligen Querbohrungen durchsetzen und mit einer entsprechenden Mutter oder einem entsprechenden Profilstein gekontert sind. Derartige Nutsteine gehören zum Stand der Technik, sodass weitere Erläuterungen bezüglich deren Form und Funktion an dieser Stelle entbehrlich sind. Das heißt, durch das modulare Führungssystem mit den erfindungsgemäßen Profilstücken 12, 14 können Führungselemente von Abdecksystemen ausgebildet werden, wobei die eigentliche Tragstruktur über am Markt erhältliche Standardprofile bereit gestellt wird, so dass die Lagerhaltungskosten vergleichsweise gering sind, da lediglich bestimmte Bereiche durch das erfindungsgemäße modulare Führungssystem ausgebildet werden und im Übrigen auf handelsübliche Profile zurück gegriffen werden kann.

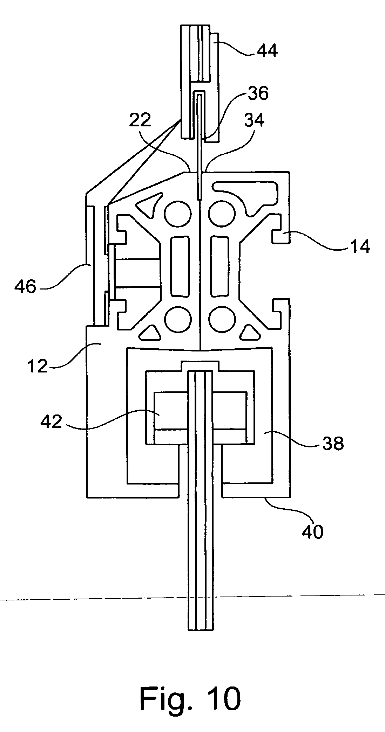

Figur 10 zeigt die zusammenmontierten Profilstücke 12, 14 gemäß Figur 8 in einem theoretischen eingebauten Zustand. Man erkennt dabei den seitlich am Profilstück 12 angesetzten Abstreifer 46, der an dem gemäß Figur 10 linken (kombinierten) Profilstück 12 fixiert (verschraubt) ist, einen in die obere, durch die beiden Abstufungen 22, 34 begrenzte schlitzförmige Aufnahme eingesetzten Führungssteg 36 (beispielsweise aus Stahl), das daran abgestützte Führungsstück 44 einer oben liegenden Gliederschürze sowie eine in den durch die beiden Profilstücke 12, 14 im unteren Bereich ausgebildeten Aufnahmeraum 38 eingesetzte Führungsschiene 40 (gemäß der Figur 6) für eine weitere Gliederschürze, die über daran fixierte Führungsbolzen 42 in der Führungsschiene 40 vorzugsweise gleitend geführt ist.

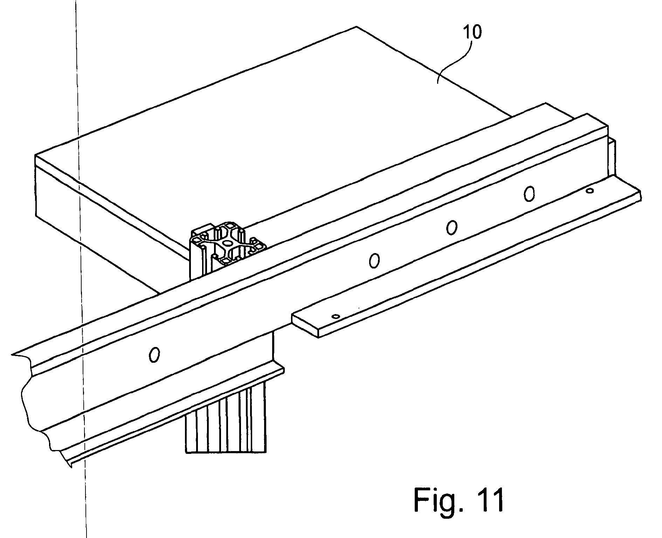

Wie in Figur 11 dargestellt ist, kann die eingangs erläuterte Schneckenplatte 10 stirnseitig über die vorstehend erläuterten Spannstifte oder eine Verschraubung an die beschriebene Rahmenstruktur mit handelsüblichen Profilen und erfindungsgemäßen Profilstücken 12, 14 angesetzt werden. Alternativ kann aber auch einfach nur eine stirnseitige Endplatte beispielsweise als Anschlag montiert sein.

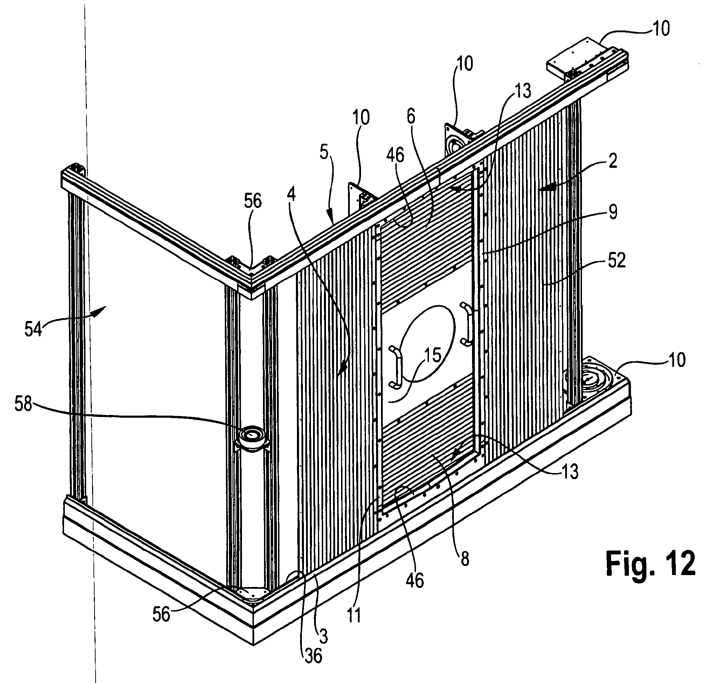

Figur 12 zeigt eine Variante des Abdecksystems gemäß Figur 1. Auch das in Figur 12 dargestellte Abdecksystem ist aus Standardprofilen sowie damit verbundenen erfindungsgemäßen Profilelementen bestehend aus den Profilstücken 12, 14 und den dazugehörenden Schneckenplatten 10 gebildet. Das für eine Werkzeugmaschine vorgesehene Abdecksystem hat zwei in X-Richtung geführte Abdeckungen 2, 4 und zwei in y-Richtung verstellbare Abdeckungen 6, 8. An einander zuweisenden Endabschnitten der beiden in y-Richtung (vertikal) verfahrbaren Abdeckungen 6, 8 ist die Adapterplatte 15 angeordnet, die beim dargestellten Ausführungsbeispiel eine einzige Durchgriffsöffnung für eine Spindel hat und die die beiden Abdeckungen 6, 8 mit einander verbindet. Beim dargestellten Ausführungsbeispiel sind die Abdeckungen 2, 4, 6, 8 beispielsweise durch die eingangs erläuterten Gliederschürzen (Alutec) gebildet, bei denen eine Vielzahl von Gliedern 52 gelenkig über Keder verbunden sind. Anstelle derartiger Aluminium-Gliederschürzen können natürlich auch andere Abdeckungen, beispielsweise Stahllamellen, Faltenbälge, textile Abdeckungen oder sonstige Konstruktionen verwendet werden.

Die hängende Führung der beiden Abdeckungen 2, 4 entlang des oben liegenden horizontal verlaufenden Profilelements 5 kann beispielsweise durch zwei Profilstücke 14 gebildet werden, die in der in Figur 6 dargestellten Weise miteinander verbunden sind. Die Führung der beiden Abdeckungen 2, 4 entlang des unten liegenden Profilelementes 3 kann dann über ein Profil erfolgen, das durch zwei Profilstücke 12, 14 gemäß Figur 4 zusammen gesetzt ist, wobei zwischen diesen beiden Profilstücken 12, 14 der Führungssteg 36 geklemmt ist, auf dem beispielsweise Führungsstücke 44 (siehe Figur 7) der Abdeckungen 2, 4 geführt sind.

Die beiden in y-Richtung verstellbaren Abdeckungen 8, 6 können beispielsweise in einer Konstruktion gemäß Figur 7 mit den beiden anderen Abdeckungen 2, 4 verbunden sein. Dementsprechend werden dann die beiden vertikal verlaufenden Profilelemente 9 und 11 durch zwei Profilstücke 12, 14 gebildet, wie sie in Figur 7 dargestellt sind. An den horizontal verlaufenden Leistenprofilen 13 sind in an sich bekannter Weise Abstreifer 46 ausgebildet. Bei einer Verstellung der Adapterplatte 15 und damit der Spindel nach oben oder unten laufen die aus dem durch die Elemente 9, 11, 13 gebildeten Rahmen heraus geschobenen Bereiche der Abdeckungen 6 bzw. 8 in rückseitig an dem Abdeckungssystem angeordnete Schneckenplatten 10 ein, von denen in der Darstellung gemäß Figur 12 lediglich die beiden oberen Schneckenplatten sichtbar sind. Entsprechende Schneckenplatten sind auch zur Aufnahme des freien Endabschnitts der Abdeckung 8 unten liegend angeordnet. Diese Schneckenplatten 10 laufen mit den in x-Richtung verstellbaren Abdeckungen 2, 4 mit.

Bei den in Figur 12 rechts dargestellten Ausführungsbeispiel läuft der rechte Endabschnitt der in x-Richtung verstellbaren Abdeckung 2 in entsprechender Weise in zwei Schneckenplatten 10 ein. In Figur 12 links dargestellt ist eine Variante, bei der keine Schneckenplatten verwendet werden, sondern bei der genügend Bauraum vorhanden ist, so dass die hängende Führung und die Führung entlang des Führungsstegs 36 mit einem Winkelrahmen 54 ausgeführt ist, in dem sich die vorbeschriebenen Führungselemente fortsetzen. Im Umlenkungsbereich zwischen dem frontseitigen Abschnitt und dem Winkelrahmen 34 sind jeweils Umlenkelemente 56 ausgeführt, über die die Ebene der Abdeckung 4 um 90° umgelenkt wird. In diesem Umlenkungsbereich sind zur Abstützung der Abdeckung 4 Umlenkrollen 58 angeordnet. Wie gesagt, ist diese Bauweise jedoch nur dann vorteilhaft, wenn genügend Bauraum erforderlich ist. Ein Vorteil einer derartigen Bauweise ist, dass weniger Kraft erforderlich ist, um die Abdeckung zu verschieben.

Durch das erfindungsgemäße modulare System lassen sich auch komplexe Führungssysteme für Werkzeugmaschinen oder für sonstige Abdeckungen ausbilden. Durch die Ausbildung von nahezu beliebig miteinander kombinierbaren Profilstücken mit zumindest teilweise mehreren Anlageseiten können nach dem Baukastenprinzip unterschiedliche oder gleiche Profilstücke zusammengesteckt/-geschraubt werden, um hierdurch individuell an die Anforderungen angepasste Profilelemente bereit zu stellen. Diese müssen folglich nicht einzeln gefertigt und auf Vorrat gehalten werden sondern können nach dem Prinzip des "lean-production" bedarfsgerecht aus den einzelnen Profilstücken zusammengestellt werden.

Das Abdecksystem kann, wie beschrieben, bei Werkzeugmaschinen verwendet werden, denkbar ist auch eine Verwendung im Ladenbau, bei Möbeln, Werkstatteinrichtung, Toren, etc.

Offenbart wird ein modulares Führungssystem für Abdeckungen, insbesondere von Werkzeugmaschinen, mit Rahmenelementen, die modular zu einem Stützrahmen zusammensetzbar sind, wobei an den Rahmenelementen integrierte Führungsteile und/oder Aufnahmen für externe Führungsteile zum Führen und/oder Halten der Abdeckung ausgebildet sind. Erfindungsgemäß ist ein Rahmenelement aus zumindest zwei gleichen oder unterschiedlichen stabartigen Profilstücken zusammengesetzt.

### Bezugszeichenliste

- 2: Gliederschürze
- 3: Profilelement
- 4: Gliederschürze
- 5: Profilelement
- 6: Gliederschürze
- 7: Profilelement
- 8: Gliederschürze
- 9: Profilelement
- 10: Schneckenplatte
- 11: Profilelement
- 12: Profilstück
- 13: Leistenprofil
- 14: Profilstück
- 15: Montage-/Adapterplatte
- 16, 16': Profilnut
- 17: Durchgangskanal/-bohrung
- 18: Durchbruch
- 19: Querbohrung
- 20: Seitenfläche
- 21: Aushöhlung
- 22, 22': Abstufung
- 23: schräge Schmalseite
- 24: L-Profil
- 26: U-Raum
- 28: Profilnut
- 30: Längsbohrung
- 32: Seitenfläche
- 34, 34': Abstufung
- 36: Führungssteg / Führungsteil
- 38: Aufnahmeraum / Aufnahme
- 40: Gleitschiene
- 42: Führungs-(gleit-)bolzen
- 44: Führungsstück
- 46: Abstreifer
- 46': Ausnehmung
- 48: Wandung
- 50: Scheitel
- 52: Glied
- 54: Winkelrahmen
- 56: Umlenkelement
- 58: Umlenkrolle

## Patentansprüche

1. Modulares Führungssystem für Abdeckungen, insbesondere von Werkzeugmaschinen, mit einer Vielzahl von Rahmenteilen, die modular zu einem Stützrahmen zusammengesetzt sind, an dem Führungselemente zum Führen der Abdeckung ausgebildet sind, wobei ein Rahmenteil aus zumindest zwei gleichen oder unterschiedlichen stabartigen Profilstücken (12, 14) zusammengesetzt ist, **dadurch gekennzeichnet, dass** die Profilstücke derart unterschiedlich profiliert sind, dass beim Zusammensetzten von zwei identischen Profilstücken (12, 14) und auch beim Zusammensetzen von zwei unterschiedlich ausgeführten Profilstücken (12, 14) jeweils zumindest eine Aufnahme für ein Führungselement ausgebildet ist, wobei ein Aufnahmeraum so ausgelegt ist, dass beim Zusammenfügen der Profilstücke (12, 14) das jeweilige Führungselement geklemmt oder formschlüssig lagefixiert ist, und wobei die Profilstücke (12, 14) derart ausgeführt sind, dass sie in einer oder mehreren Relativpositionen sowohl eine Aufnahme für einen Führungssteg (36) als auch eine Aufnahme für andere Führungselemente ausbilden.

2. Führungssystem nach Patentanspruch 1, wobei die Profilstücke (12, 14) zueinander kompatible Ausnehmungen zur Aufnahme eines Verbindungsmittels haben.

3. Führungssystem nach Patentanspruch 2, wobei das Verbindungsmittel ein Nutenstein ist, der in ein Nutprofil (16, 28) des Profilstücks (12, 14) einsetzbar.

4. Führungssystem nach einem der vorhergehenden Patentansprüche, wobei ein Profilstück (12, 14) arbeitsraumseitig vorgesehen und mit einer Schräge (23) zur Ableitung von Spänen ausgeführt ist.

5. Führungssystem nach einem der vorhergehenden Patentansprüche, wobei die Profilstücke (12, 14) eine Trag- und Führungsfunktion haben.

6. Führungssystem nach einem der vorhergehenden Patentansprüche, wobei die Profilstücke (12, 14) und handelsübliche Rahmenteile mit einer zueinander kompatiblen Profilierung zum Ansetzen von Verbindungsmitteln ausgeführt sind.

7. Führungssystem nach einem der vorhergehenden Patentansprüche, mit einer Distanzleiste zum Einsetzen zwischen zwei Profilstücken.

8. Führungssystem nach einem der vorhergehenden Patentansprüche, wobei die Aufnahme derart ausgeführt ist, dass eine Gleitschiene (40) oder ein Führungssteg (36) eingesetzt werden kann.

9. Führungssystem nach einem der vorhergehenden Patentansprüche, wobei das Führungselement eine Gleitschiene oder ein Wälzlager ist.

10. Führungssystem nach einem der vorhergehenden Patentansprüche, wobei die Profilstücke (12, 14) einen Durchbruch zur Aufnahme von Spannstiften haben.

11. Führungssystem nach einem der vorhergehenden Patentansprüche, wobei zumindest ein Profilstück (12, 14) einer Ausnehmung (46') zum Ansetzen eines Abstreifers (46) hat.

12. Führungssystem nach einem der vorhergehenden Patentansprüche, wobei die Profilstücke (12, 14) mit Hohlräumen zur Gewichtsminimierung ausgeführt sind.

13. Führungssystem nach einem der vorhergehenden Patentansprüche, wobei die Profilstücke (12, 14) Aluminiumprofile sind.

14. Führungssystem mit einer Schneckenplatte (10) zum Ansetzen an die Profilstücke.

## Claims

1. Modular guiding system for covers, in particular for machine tools, having a plurality of frame parts, which are modularly joined together to form a support frame, at which guide elements are formed for guiding the cover, wherein a frame part is composed of at least two rod-like profile sections (12, 14) that are either the same or different, **characterized in that** the profile sections are profiled differently such that when two identical profile sections (12, 14) are joined together and also when two differently-configured profile sections (12, 14) are joined together, at least one receiving means for a guide element is respectively formed, wherein a receiving space is construed such that when the profile sections (12, 14) are joined together, the respective guide element is clamped or form-fit to be fixed in position, and wherein the profile sections (12, 14) are configured such that, when being in one or more relative positions, they form a receiving means for a guide ridge (36) as well as a receiving means for another guide element.

2. Guiding system according to patent claim 1, wherein the profile sections (12, 14) have recesses compatible to each other for receiving a connecting means.

3. Guiding system according to patent claim 2, wherein the connecting means is a slot nut which is insertable into a slot profile (16, 28) of the profile section (12, 14).

4. Guiding system according to one of the preceding patent claims, wherein a profile section (12, 14) is provided on the working-area side and is configured with a slope (23) to discharge chips.

5. Guiding system according to one of the preceding patent claims, wherein the profile sections (12, 14) have a support and guide function.

6. Guiding system according to one of the preceding patent claims, wherein the profile sections (12, 14) and standard frame parts are configured with profiling compatible to each other for attaching connecting means.

7. Guiding system according to one of the preceding patent claims, having a spacing strip for insertion between two profile sections.

8. Guiding system according to one of the preceding patent claims, wherein the receiving means is configured such that a slide rail (40) or a guide ridge (36) can be inserted.

9. Guiding system according to one of the preceding patent claims, wherein the guide element is a slide rail or a roller bearing.

10. Guiding system according to one of the preceding patent claims, wherein the profile sections (12, 14) have an aperture for receiving roll pins.

11. Guiding system according to one of the preceding patent claims, wherein at least one profile section (12, 14) has a recess (46') for attaching a wiper (46).

12. Guiding system according to one of the preceding patent claims, wherein the profile sections (12, 14) are configured with hollow spaces for minimizing weight.

13. Guiding system according to one of the preceding patent claims, wherein the profile sections (12, 14) are aluminum profiles.

14. Guiding system having a spiral plate (10) for attaching it to the profile sections.

## Revendications

1. Système de guidage modulaire pour des recouvrements, en particulier de machines-outils avec une pluralité de parties de cadre qui sont assemblées de manière modulaire en un cadre d'appui, sur lequel des éléments de guidage sont réalisés pour le guidage du recouvrement, dans lequel une partie de cadre est composée d'au moins deux pièces profilées (12, 14) de type barre différentes ou identiques, **caractérisé en ce que** les pièces profilées sont profilées différemment de telle manière que lors de l'assemblage de deux pièces profilées identiques (12, 14) et aussi lors de l'assemblage de deux pièces profilées (12, 14) réalisées différemment, respectivement au moins un logement pour un élément de guidage soit réalisé, dans lequel un espace de réception est conçu de sorte que lors de l'assemblage des pièces profilées (12, 14), l'élément de guidage respectif soit serré ou fixé en position par complémentarité de formes, et dans lequel les pièces profilées (12, 14) sont réalisées de telle manière qu'elles réalisent dans une ou plusieurs positions relatives non seulement un logement pour une nervure de guidage (36) mais aussi un logement pour d'autres éléments de guidage.

2. Système de guidage selon la revendication 1, dans lequel les pièces profilées (12, 14) possèdent des évidements compatibles l'un par rapport à l'autre pour le logement d'un moyen de liaison.

3. Système de guidage selon la revendication 2, dans lequel le moyen de liaison est un coulisseau qui peut être inséré dans un profilé rainuré (16, 28) de la pièce profilée (12, 14).

4. Système de guidage selon l'une quelconque des revendications précédentes, dans lequel une pièce profilée (12, 14) est prévue côté espace de travail et est réalisée avec un biais (23) pour l'évacuation de copeaux.

5. Système de guidage selon l'une quelconque des revendications précédentes, dans lequel les pièces profilées (12, 14) présentent une fonction de support et de guidage.

6. Système de guidage selon l'une quelconque des revendications précédentes, dans lequel les pièces profilées (12, 14) et les parties de cadre usuelles sont réalisées avec un profilage compatible entre elles pour le placement de moyens de liaison.

7. Système de guidage selon l'une quelconque des revendications précédentes, avec une barre d'écartement pour l'insertion entre deux pièces profilées.

8. Système de guidage selon l'une quelconque des revendications précédentes, dans lequel le logement est réalisé de telle manière qu'un rail de glissement (40) ou une nervure de guidage (36) puisse être insérée.

9. Système de guidage selon l'une quelconque des revendications précédentes, dans lequel l'élément de guidage est un rail coulissant ou un palier à roulement.

10. Système de guidage selon l'une quelconque des revendications précédentes, dans lequel les pièces profilées (12, 14) présentent une interruption pour la réception de goupilles de serrage.

11. Système de guidage selon l'une quelconque des revendications précédentes, dans lequel au moins une pièce profilée (12, 14) possède un évidement (46') pour le placement d'une racle (46).

12. Système de guidage selon l'une quelconque des revendications précédentes, dans lequel les pièces profilées (12, 14) sont réalisées avec des espaces creux pour la réduction du poids.

13. Système de guidage selon l'une quelconque des revendications précédentes, dans lequel les pièces profilées (12, 14) sont des profilés en aluminium.

14. Système de guidage avec une plaque en hélice (10) pour le placement sur les pièces profilées.
